# EUROPÄISCHE PATENTSCHRIFT

(11) **EP 1 484 591 B1**
(45) Veröffentlichungstag und Bekanntmachung des Hinweises auf die Patenterteilung: **21.09.2011**
(21) Anmeldenummer: 04450099.9
(22) Anmeldetag: 28.04.2004
(51) Int. Cl.: G01M 15/00

(54) **Verfahren zur Vorbereitung und Durchführung von Prüfstandsversuchen sowie Palettenkonstruktion zur Verwendung in einem derartigen Verfahren**
Method for preparation of portable engine test stand
Procédé de préparation et de réalisation de tests sur banc d'essai et charriot-pallette associé

(30) Priorität: 02.06.2003 AT 3832003 U
(43) Veröffentlichungstag der Anmeldung: 08.12.2004
(73) Patentinhaber: AVL List GmbH, 8020 Graz (AT)
(72) Erfinder: Emmerer, Peter, 8055 Graz (AT); Buchalla, Harald, 8051 Lieboch (AT)
(74) Vertreter: Pinter, Rudolf

(56) Entgegenhaltungen:
- DE-A- 10 049 192
- US-A- 4 932 628
- US-A1- 2001 039 832

## Beschreibung

Die Erfindung betrifft ein Verfahren zur Vorbereitung und Durchführung von Prüfstandsversuchen an einem Prüfling, insbesonders an einem oder mehreren zusammenwirkenden Element(en) eines Fahrzeuges, wie beispielsweise einer Brennkraftmaschine oder Teilen eines Antriebsstranges, wobei der Prüfling auf eine transportable Palettenkonstruktion montiert wird, die einen vorzugsweise selbst fahrbaren Basisteil und darauf angeordnete, vorzugsweise zur Aufnahme verschiedener Prüflinge räumlich verstellbare Halteelemente aufweist und wobei die Montage abseits des Prüfstandes in einem Rüstbereich erfolgt. Weiters betrifft die Erfindung auch eine Palettenkonstruktion zur Verwendung in einem derartigen Verfahren.

Speziell in der Fahrzeugentwicklung bzw. der Entwicklung von in Fahrzeugen zum Einsatz kommenden Elementen und Aggregaten, aber auch beispielsweise bei Antriebsmotoren von land- und forstwirtschaftlichen Geräten, oder Industrie- und Stationärmotoren u. dgl., kommt der Kostenreduktion bzw. der gesteigerten Effizienz im Zusammenhang mit dem Prüfstandsbetrieb große Bedeutung zu. Entsprechende Prüfstände werden heutzutage zumeist als eigene Unternehmen im Unternehmen geführt, wobei alle anfallenden Kosten durch laufende Projekte abzudecken sind. Die technische Ausrüstung an derartigen Prüfständen ist äußerst vielfältig und ständig auf höchstem Niveau zu halten, um den jeweils neuesten Anforderungen etwa in der Motor-, Getriebe- oder Fahrzeugentwicklung, bzw. auch bei Prüfungen im Zuge der Erprobung, Fertigung, Inbetriebnahme oder Endkontrolle u. dgl., gerecht werden zu können. Neben der maximalen Ausnutzung der Gerätschaften ist es daher oberstes Ziel des Prüfstandsbetreibers, die Prüfstandslaufzeiten auf einem sehr hohen Niveau verglichen mit den Stillstands- bzw. Rüstzeiten zu halten.

Beispielsweise aus AT 407 922 B sind Verfahren und Palettenkonstruktionen der eingangs genannten Art bekannt, die es ermöglichen, den Prüfling, beispielsweise eine Brennkraftmaschine, nicht erst im Prüfraum des Prüfstandes selbst zu montieren, sondern zumindest die wesentlichsten Montageschritte bereits außerhalb des Prüfraumes vorzunehmen, wobei der Prüfling auf eine Paletten konstruktion montiert wird, welche dann für die Durchführung der Prüfungen mittels eines Zuführsystems in den Prüfraum gebracht und dort mit den entsprechenden Anschlüssen und Sensoren u.dgl. versehen wird. Es lässt sich damit zwar ein Teil der früher entsprechende Stillstandszeiten am Prüfstand erzwingenden Rüstzeiten vom Prüfstand weg in einen Rüstbereich verlagern, wobei aber immer noch wesentliche und zeitaufwendige Arbeiten zur Bestückung des Prüflings mit den erforderlichen Sensoren sowie diverse vorab durchzuführende Vorbereitungsarbeiten u.dgl. die Auslastung des Prüfstandes selbst negativ belasten,

DE-A 100 49 192 behandelt die Ausrüstung bzw. Verwendung von Montageplatten für Brennkraftmaschinen, auf denen die gesamte Produktionslinie nach dem Ende der Montage bzw. auch bereits nach dem Ende von einzelnen Montageschritten gewissen Tests unterzogen wird, wovon nur ein Teil (bzw. nur bei manchen der Prüflinge) in einem Prüfstand durchgeführt wird, wenn tatsächlich eine Elektromaschine für einen derartigen Test benötigt wird. Es wird also ein Teil der (für die Produktionsprüfung) erforderlichen Tests unabhängig vom Prüfstandsbereich durchgeführt; d.h. es werden diese Tests außerhalb des Prüfstandes am Band bzw. während des Transportes durchgeführt.

Auch die US-A 4 932 628 behandelt lediglich eine Art mobiler Prüfstand, der alle dort wesentlichen Testmöglichkeiten und Testgeräte on-board trägt und keinesfalls als Entlastung eines nachfolgend noch anzufahrenden eigentlichen Prüfstandes oder dgl. gedacht ist.

Ähnliches gilt auch für die US-A-2001/0039832, bei der insbesonders auch die Signalkonditionierungseinheiten und ähnliche Zusatzgeräte nach wie vor am Prüfstand bestückt und angeschlossen werden müssen.

Aufgabe der vorliegenden Erfindung ist es, ein Verfahren der eingangs genannten Art so zu verbessern, dass die Prüfstandslaufzeiten gegenüber den Stillstandszeiten weiter erhöht werden können, sodass eine weitere Kostenreduktion bzw. Effizienzsteigerung am Prüfstand möglich ist. Dazu soll weiters eine entsprechende Palettenkonstruktion angegeben werden, die diese Anforderungen erfüllt.
Die Erfindung geht im wesentlichen davon aus, dass für eine signifikante Erhöhung (beispielsweise Verdoppelung) der bis dato möglichen effektiven Prüfstandsiaufzeiten möglichst alle Rüst- und Parametrieraktivitäten weg vom Prüfstand und in einen Rüstbereich verlagert werden müssen, was nicht nur eine Änderung des üblichen Verfahrens zur Vorbereitung und Durchführung derartiger Prüfstandsversuche, sondern auch eine neue Palettenkonstruktion erfordert. Davon ausgehend wird die gestellte Aufgabe beim erfindungsgemäßen Verfahren dadurch gelöst, dass bereits vorher oder ebenfalls im Rüstbereich die Sensoren angebracht und entsprechende Signalkonditionierungseinheiten an einer Strömungskanäle für ein Kühlmedium aufweisenden Trageanordnung der Palettenkonstruktion angeordnet und mit den Sensoren verbunden werden, dass die derart bestückte Palettenkonstruktion dann an den Prüfstand transportiert und dort durch Herstellen einer Signalverbindung zwischen den Signalkonditionierungseinheiten an der Palettenkonstruktion und der Auswerteeinrichtung des Prüfstandes installiert wird, und wobei die Signalkonditionierungseinheiten bedarfsweise mittels der Strömungskanäle gekühlt werden. Der Prüfling wird also im Rüstbereich nicht nur auf die Palettenkonstruktion aufgebaut, sondern weiters entweder dann anschließend oder auch bereits vorweg mit Sensoren versehen. Alle weiteren zur Sicherstellung einer kalibrierten Messkette erforderlichen Signalkonditionierungseinheiten und ähnliches werden ebenfalls im Rüstbereich am Prüfling und/oder der Palettenkonstruktion selbst angeordnet, sodass nach dem Transport der derart fertig bestückten Palettenkonstruktion an den Prüfstand bzw. in den Prüfraum dort nur noch eine entsprechende Signalverbindung zwischen der Palettenkonstruktion und der Auswerteeinrichtung erforderlich ist, welche im Normalfall einfach über ein Bus-Kabel erfolgen kann. Weiters können im Prüfraum dann natürlich noch Medienanschlüsse (beispielsweise Kühl- oder Spülwasser, Kühlluft, Abgasabsaugung u.ä.) bzw. weitere prüfstandsseitige Messtechnikanschlüsse (beispielsweise zur Kraftstoffverbrauchsmessung oder zur Abgasanalyse) herzustellen sein, was sich aber auf das einfache Stecken der entsprechenden Verbindungen beschränkt. Die Signalkonditionierungseinheiten verbleiben auch während des eigentlichen Prüfstandslaufes an der Traganordnung der Palettenkonstruktion, sodass nach Einbringung der bestückten Palettenkonstruktion in den Prüfraum dort keinerlei eigentliche Montagearbeiten mehr vorzunehmen sind und auch die Anbringung derartiger Signalkonditionierungseinheiten an den üblichen Prüfstandsgalgen sowie das Verbinden der Sensoren mit den Signalkonditionierungseinheiten entfallen. Die Signalkonditionierungseinheiten sind mittels in der Traganordnung angeordneter Strömungskanäle für Kühlmedium kühlbar; wobei die Zuführung des Kühlmediums (beispielsweise. Kühlluft) über integrierte Gebläse oder ähnliche Einheiten oder aber über entsprechende Anschlussleitungen im Prüfraum erfolgen kann.

Die gesamte bestückte Palettenkonstruktion (also die Palette selbst samt Prüfling, Traganordnung, Signalkonditionierungseinheiten, Sensoren usw.) kann in weiters bevorzugter Ausgestaltung der Erfindung vor der Installierung am Prüfstand noch im Rüstbereich oder einem im Transportweg vor dem Prüfstand gelegenen Testbereich funktional geprüft werden, soweit dies vor dem Andocken am Prüfstand bzw. ohne die Inbetriebnahme des Prüflings möglich ist. Es können damit nicht nur die Sensoren und die Signalkonditionierungseinheiten auf prinzipielle Funktion geprüft und beispielsweise auch kalibriert werden, sondern auch die Dichtheit pneumatischer und/oder hydraulischer Hilfssysteme, die Funktion von Wärmetauschern, die Festigkeit von Montageverbindungen u.dgl. vorweg getestet werden, ohne dass dafür dann später kostbare Prüfstandszeit verbraucht werden müsste. Für diese funktionalen Vorabprüfungen können im Rüstbereich bzw. in dem separaten Testbereich auch eigene Prüfeinrichtungen (mit Modulen zur Versorgung, zum Ansteuern und zum messtechnischen Erfassen der Funktionen der zu prüfenden Einrichtungen) vorgesehen sein, welche vorzugsweise auch ähnlich wie der eigentliche Prüfstand an die Palettenkonstruktion andocken.

Der Prüfling kann in besonders bevorzugter weiterer Ausgestaltung der Erfindung vor der Installierung der bestückten Palettenkonstruktion am Prüfstand in einem Konditionierungsbereich vorbehandelt, beispielsweise auf Betriebstemperatur gebracht, werden. Auch damit können nicht erforderlicherweise am Prüfstand selbst auszuführende Tätigkeiten kostensparend vorweg in einem anderen Bereich erledigt werden.

Die Palettenkonstruktion zur Verwendung in einem erfindungsgemäßen Verfahren weist einen vorzugsweise selbst fahrbaren Basisteil mit darauf angeordneten, vorzugsweise zur Aufnahme verschiedener Prüflinge räumlich verstellbaren Halteelementen sowie eine Traganordnungauf, welche mit Signalkonditionierungseinheiten versehen ist, die mittels in der Traganordnung angeordneter Strömungskanäle für ein Kühlmedium kühlbar sind. Damit können alle vor der eigentlichen Prüfstandsarbeit vorzunehmenden Verbindungen, Verkaberungen, Sensoranbringungen u.dgl. an der Palettenkonstruktion selbst vorgenommen werden, die dann auf beschriebene Weise vorab geprüft bzw. behandelt werden kann und erst dann für die Durchführung der eigentlichen Prüfung in den Prüfraum am Prüfstand verbracht wird. Die Traganordnung kann abgesehen von den Signalkonditionierungseinheiten erforderlichenfalls auch weitere Messgeräte, Anzeige- und Bedienelemente oder sonstige, für die Prüfung im Prüfraum selbst benötigte und ohnedies mit dem Prüfling und/oder den auf der Palettenkonstruktion vorhandenen Geräten zu verbindende Einheiten tragen. Die Zuführung des Kühlmediums (beispielsweise Kühlluft) kann über integrierte Gebläse oder ähnliche Einheiten oder aber über entsprechende Anschlussleitungen im Prüfraum erfolgen.

Die Traganordnung ist in bevorzugter weiterer Ausgestaltung der erfindungsgemäßen Palettenkonstruktion relativ zum Basisteil verstellbar und/oder gegenüber diesem schwingungsisoliert aufgehängt. Die Verstellmöglichkeit erlaubt eine kompakte Anordnung für Montage und Transport - an Ort und Stelle im Prüfraum kann dann beispielsweise die Traganordnung mit den Signalkonditionierungseinheiten räumlich vom Prüfling weiter entfernt werden, um beispielsweise elektrischen Störfeldern, höheren Temperaturen o.ä. ungünstigen Einflüssen ausweichen zu können.

Die Schwingungsisolierung der Traganordnung relativ zum Basisteil oder die bevorzugte Schwingungsisolierung der Signalkonditionierungseinheiten in der Traganordnung vermeidet störende Auswirkungen von Vibrationen beispielsweise von Motoren, Getrieben oder ähnlichen Prüflingen auf die Signalkonditionierungseinheiten.

In besonders bevorzugter weiterer Ausgestaltung der Erfindung ist vorgesehen, dass die Traganordnung für die Signälkönditionierungseinheiten zumindest zum Teil doppelwandig ausgeführt ist, wobei ein damit gebildeter, zumindest auf einer Seite an die Signalkonditionierungseinheiten angrenzender Hohlraum mit einer Kühlmediumzu- und -ableitung, vorzugsweise für Umgebungsluft, verbunden ist. Damit kann unmittelbarerer Wärmeeintrag von außen (beispielsweise über eine Brennkraftmaschine oder deren Kühler od.dgl.) wirkungsvoll unterbunden werden.

Der die Signalkonditionierungseinheiten aufnehmende Innenraum der doppelwandigen Traganordnung kann dabei auch separat über Zu- und Ableitungen mit gefilterter Kühlluft gekühlt werden. In beiden Fällen können wiederum beispielsweise in die Palettenkonstruktion integrierte Pumpen bzw. Lüfter oder aber entsprechende Anschlussleitungen im Prüfraum vorgesehen sein.

In weiters bevorzugter Ausgestaltung der Erfindung weist die Traganordnung für die Signalkonditionierungseinheiten eine EMV-Abschirmung auf, was besonders dann vorteilhaft ist, wenn die einzelnen in der Traganordnung angeordneten Einheiten nicht ohnedies separat abgeschirmt sind.

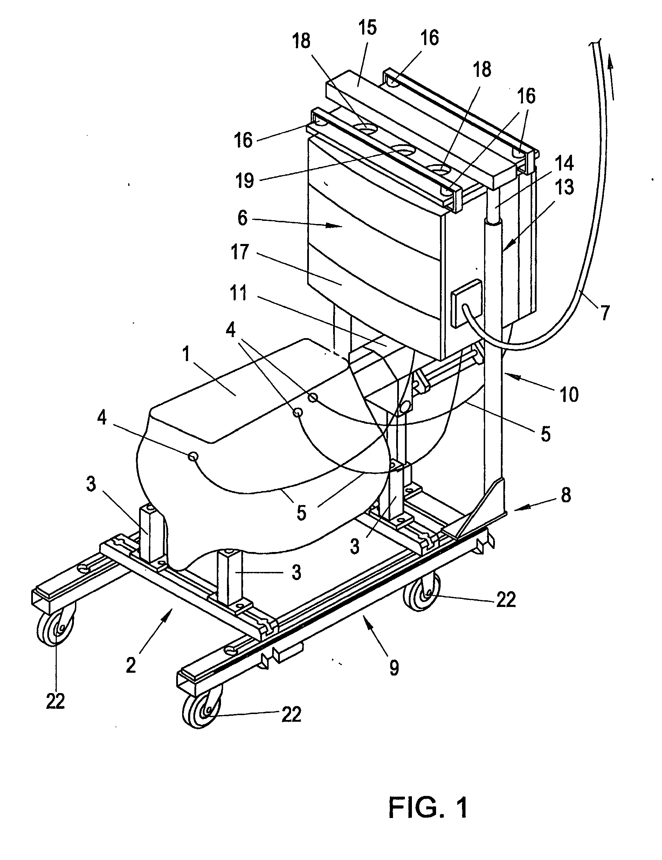

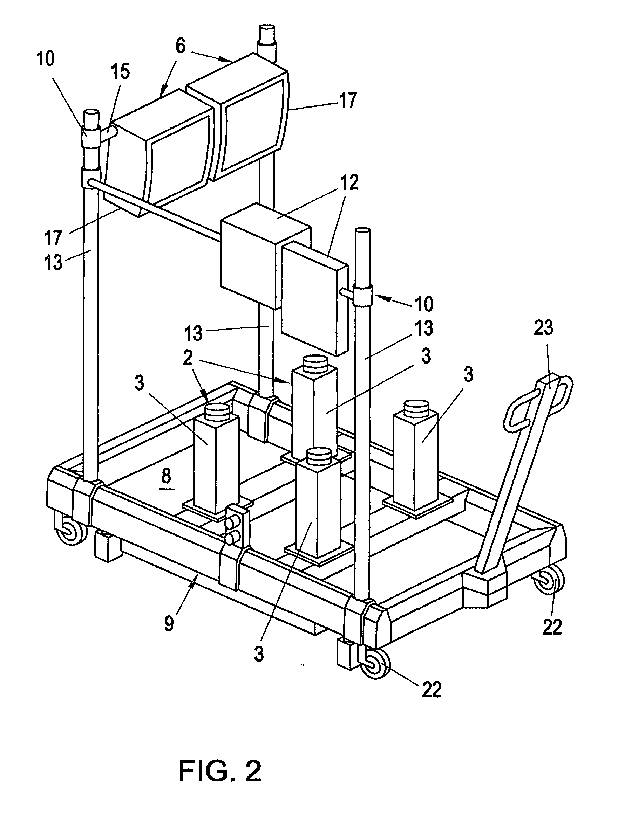

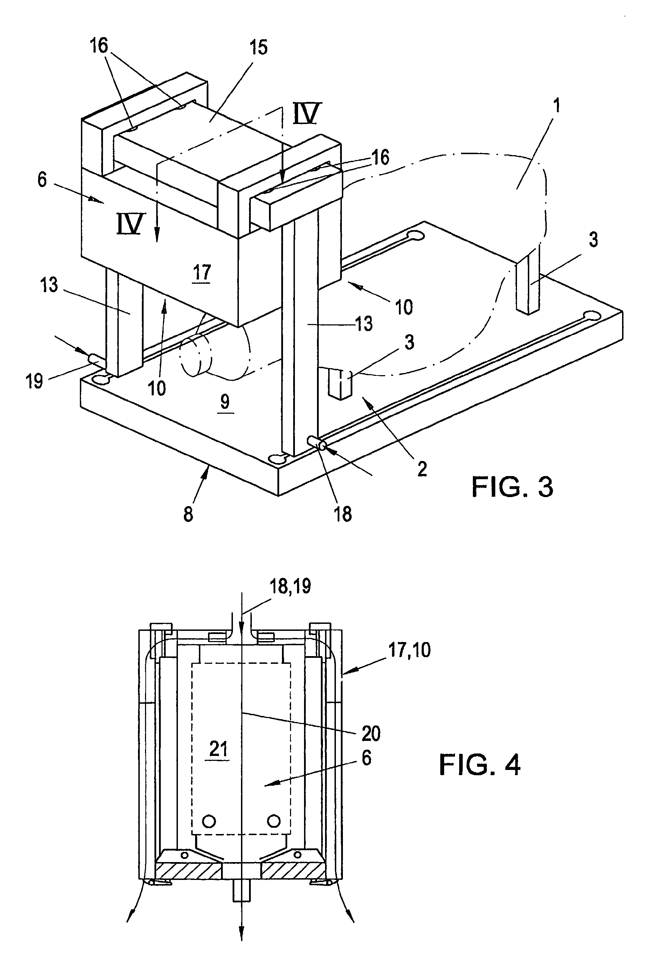

Die Erfindung wird im folgenden noch anhand der an der Zeichnung schematisch dargestellten Ausführungsbeispiele einer Palettenkonstruktion für Prüfstandsversuche näher erläutert. Fig. 1 zeigt dabei die perspektivische Draufsicht auf eine mit einem Prüfling, wie beispielsweise einer Brennkraftmaschine, bestückte Palettenkonstruktion, vorbereitet zum Transport beispielsweise zu einem hier nicht weiter dargestellten Prüfstand, Fig. 2 ein anderes Ausführungsbeispiel einer derartigen Palettenkonstruktion ohne Prüfling, Fig. 3 ein weiteres Ausführungsbeispiel einer entsprechenden Palettenkonstruktion mit angedeutetem Prüfling und Fig. 4 einen teilweisen Schnitt durch eine Palettenkonstruktion beispielsweise gemäß Fig. 1 oder Fig. 3 im Bereich der Traganordnung zur Aufnahme und Befestigung verschiedener Signalkonditionierungseinheiten - beispielsweise entlang der Linie IV - IV in Fig. 3 in vergrößertem Maßstab.

Zur Vorbereitung und Durchführung von Prüfstandsversuchen an einem Prüfling 1, beispielsweise einer in Fig. 1 und Fig. 3 schematisch eingezeichneten Brennkraftmaschine, wird der Prüfling 1 gemäß Fig. 1 bis 3 auf eine Halteeinrichtung 2 montiert, welche zumeist räumlich verstellbare Halteelemente 3 aufweist, die eine Anpassung der eigentlichen Haltepunkte an verschiedene Prüflinge 1 erlauben. Bereits vorher oder aber nach der Montage des Prüflings 1 auf der Halteeinrichtung 2 wird dieser mit Sensoren 4 (nur in Fig. 1 angedeutet) entsprechend den durchzuführenden Versuchen versehen, welche ihrerseits über Signalleitungen 5 mit Signalkonditionierungseinheiten 6 und von dort aus über eine gemeinsame Signalverbindung 7 mit einer nicht weiter dargestellten Auswerteeinrichtung am Prüfstand verbunden werden. Die gesamte Palettenkonstruktion 8, welche einen vorzugsweise selbstfahrbaren Basisteil 9, die darauf angeordneten Halteelemente 3 der Halteeinrichtung 2 sowie eine Traganordnung 10 zur Aufnahme und Befestigung der Signalkonditionierungseinheiten 6 aufweist, wird also vorweg und abseits des Prüfstandes in einem Rüstbereich mit dem Prüfling 1, den Sensoren 4, den Signalkonditionierungseinheiten 6 und den Signalleitungen 5 versehen und sodann im fertig bestückten Zustand an den Prüfstand transportiert, wo nur noch die Signalverbindung 7 (beispielsweise eine einfache Bus-Leitung) zwischen den Signalkonditionierungseinheiten 6 an der Palettenkonstruktion 8 und der hier nicht weiter dargestellten Auswerteeinrichtung installiert wird. Der Prüfling 1 ist ebenfalls im Prüfraum des Prüfstandes dann beispielsweise mit einem elektrischen Antrieb oder einer Leistungsbremse od. dgl. zu verbinden - ein Wellenschutztunnel ist in Fig. 1 eingezeichnet und mit 11 bezeichnet.

An der Traganordnung 10 können auf beispielsweise in Fig. 2 angedeutete Weise auch weitere Mess-, Anzeige- oder Bedienelemente 12 angebracht sein, wobei diese auch von den Signalkonditionierungseinheiten 6 separiert sein können.

Die bestückte Palettenkonstruktion 8, die im Bereich des Basisteils 9 auch weitere hier nicht dargestellte Funktionselemente, wie etwa Wärmetauscher, Medienanschlüsse od. dgl. aufweisen kann, kann vor der Installierung am Prüfstand entweder noch im Rüstbereich oder aber in einem im Transportweg vor dem Prüfstand gelegenen Testbereich funktional geprüft werden, wozu auch speziell ausgebildete und gleich oder ähnlich wie der Prüfstand selbst an der Palettenkonstruktion andockende Prüfeinrichtungen bereitgestellt werden können. Der Prüfling kann bei dieser Gelegenheit, oder aber auch separat vor der Installierung der bestückten Palettenkonstruktion 8 in einem Konditionierungsbereich, auch vorbehandelt, beispielsweise auf Betriebstemperatur gebracht werden.

All die beschriebenen Maßnahmen zusammen ermöglichen es, am Prüfstand selbst nur noch wenige Anschlussarbeiten vor der Durchführung der eigentlichen Prüfungen vornehmen zu müssen, was die Prüfstandauslastung potentiell drastisch erhöht.

Die Traganordnung 10 weist in allen hier dargestellten Ausführungsbeispielen zumindest zwei seitliche Steher 13 auf, welche gemäß Fig. 1 einen teleskopartig, beispielsweise mittels Handwinde, oder auch elektrisch, pneumatisch oder hydraulisch, ausfahrbaren Oberteil 14 aufweisen, womit die Signalkonditionierungseinheiten 6 am Prüfstand bei der Durchführung der Prüfungen vom Prüfling 1 weiter entfernt werden können, um beispielsweise Temperatur- oder Schwingungsbelastungen zu minimieren. Sowohl gemäß Fig. 1 als auch gemäß Fig. 3 sind die beiden seitlichen Steher 13 (bzw. 14) mit einem Querträger 15 verbunden, der über elastische Elemente 16 abgekoppelt eine Aufnahmebox 17 für die Signalkonditionierungseinheiten 6 trägt. Davon abgesehen könnten die Signalkonditionierungseinheiten 6 - oder aber auch nur einzelne davon - in einer an sich starr ausgebildeten Traganordnung auch separat schwingungsisoliert gelagert sein.

Aus den Fig. 1 und 4 sind an der Oberseite der Aufnahmebox 17 vorgesehene Kühl- bzw. Spülluftöffnungen 18, 19 zu sehen. Die durch die Öffnungen 18 zugeführte Kühlluft wird konditioniert, speziell gefiltert bzw. auch separat gekühlt, und durchströmt den Innenraum der doppelwandig ausgebildeten Traganordnung 10 bzw. Aufnahmebox 17 entlang des Pfeiles 20 (Fig. 4), womit die im Innenraum 21 angeordneten Signalkonditionierungseinheiten 6 bedarfsweise gekühlt werden können. Durch die Öffnung 19 kann Umgebungsluft als Spülluft durch den äußeren Teil der doppelwandigen Aufnahmebox 17 geführt werden, womit Wärmeeintrag von außen, beispielsweise vom Prüfling 1, unterbunden wird.

Den Öffnungen 18 und 19 entsprechende Öffnungen sind in Fig. 3 jeweils an einem der beiden Steher 13 im Bereich von deren Verbindung mit dem Basisteil 9 vorgesehen, wobei in diesem Fall die beiden Steher 13 sowie der Querträger 15 über ihre hohlen Innenräume in Verbindung stehen - die separate Zuführung von Kühlluft und Spülluft zur Aufnahmebox 17 ist in Fig. 3 nicht extra dargestellt.

Sowohl gemäß Fig. 1 als auch gemäß Fig. 3 kann die Zu- und Ableitung von Kühl- und Spülluft über Anschlüsse an entsprechende Einrichtungen am Prüfstand erfolgen - alternativ dazu könnten beispielsweise auch geeignete Gebläse und Konditionierungseinheiten in der Traganordnung 10 bzw. der Aufnahmebox 17 selbst vorgesehen sein.

Die Traganordnung 10 bzw. Aufnahmebox 17 kann ganz oder bereichsweise auch mit einer EMV-Abschirmung versehen werden, was besonders dann vorteilhaft ist, wenn die einzelnen darin unterzubringenden Signalkonditionierungseinheiten 6 nicht selbst eine derartige Abschirmung aufweisen.

Nur der Vollständigkeit halber ist auf die gemäß Fig. 1 und 2 an der Unterseite des Basisteils 9 vorgesehenen Transportrollen 22 zu verweisen, mit denen die Palettenkonstruktion 8 selbst fahrbar ist. Bei der Anordnung nach Fig. 2 ist ähnlich wie bei Hubstaplern eine Bedieneinrichtung 23 vorgesehen, mit der die gesamte Palettenkonstruktion 8 zum Verfahren angehoben und an Ort und Stelle abgesenkt werden kann. Die Palettenkonstruktion 8 gemäß Fig. 3 ist demgegenüber nicht selbst fahrbar und kann beispielsweise mittels eines Hubstaplers transportiert werden. Die Anordnungen nach Fig. 1 bis 3 können im Prüfraum des Prüfstandes auch beispielsweise auf Andockrampen gefahren und dort stabil gehalten werden, wobei in allen Fällen dabei auch unmittelbar zumindest ein Teil der erforderlichen Mediumanschlüsse angedockt werden kann.

## Patentansprüche

1. Verfahren zur Vorbereitung und Durchführung von Prüfstandsversuchen an einem Prüfling (1), insbesonders an einem oder mehreren zusammenwirkenden Element(en) eines Fahrzeuges, wie beispielsweise einer Brennkraftmaschine oder Teilen eines Antriebsstranges, wobei der Prüfling (1) auf eine transportable Palettenkonstruktion (8) montiert wird, die einen vorzugsweise selbst fahrbaren Basisteil (9) und darauf angeordnete, vorzugsweise zur Aufnahme verschiedener Prüflinge (1) räumlich verstellbare Halteelemente (3) aufweist und wobei die Montage abseits des Prüfstandes in einem Rüstbereich erfolgt, **dadurch gekennzeichnet, dass** bereits vorher oder ebenfalls im Rüstbereich die Sensoren (4) angebracht und entsprechende Signalkonditionierungseinheiten (6) an einer Strömungskanäle für ein Kühlmedium aufweisenden Trageanordnung (10, 17) der Palettenkonstruktion (8) angeordnet und mit den Sensoren (4) verbunden werden, dass die derart bestückte Palettenkonstruktion (8) dann an den Prüfstand transportiert und dort durch Herstellen einer Signalverbindung (7) zwischen den Signalkonditionierungseinheiten (6) an der Palettenkonstruktion und der Auswerteeinrichtung des Prüfstandes installiert wird, und wobei die Signalkonditionierungseinheiten (6) bedarfsweise mittels der Strömungskanäle gekühlt werden.

2. Verfahren nach Anspruch 1, **dadurch gekennzeichnet, dass** die bestückte Palettenkonstruktion (8) vor der Installierung am Prüfstand noch im Rüstbereich oder einem im Transportweg vor dem Prüfstand gelegenen Testbereich funktional geprüft wird.

3. Verfahren nach Anspruch 1 oder 2, **dadurch gekennzeichnet, dass** der Prüfling (1) vor der Installierung der bestückten Palettenkonstruktion (8) am Prüfstand in einem Konditionierbereich vorbehandelt, beispielsweise auf Betriebstemperatur gebracht, wird.

4. Palettenkonstruktion zur Verwendung in einem Verfahren nach einem der Ansprüche 1 bis 3, mit einem vorzugsweise selbst fahrbaren Basisteil (9) und darauf angeordneten, vorzugsweise zur Aufnahme verschiedener Prüflinge (1) räumlich verstellbaren Halteelementen (3), und einer Traganordnung (10), **dadurch gekennzeichnet, dass** die Traganordnung mit Signalkonditionierungseinheiten (6) versehen ist, und dass die Signalkonditionierungseinheiten (6) mittels in der Traganordnung (10, 17) angeordneter Strömungskanäle für ein Kühlmedium kühlbar sind.

5. Palettenkonstruktion nach Anspruch 4, **dadurch gekennzeichnet, dass** die Traganordnung (10) relativ zum Basisteil (9) verstellbar und/oder gegenüber diesem schwingungsisoliert aufgehängt ist.

6. Palettenkonstruktion nach Anspruch 4 oder 5, **dadurch gekennzeichnet, dass** die Signalkonditionierungsetnheiten (6) in der Traganordnung (10) schwingungsisoliert gelagert sind.

7. Palettenkonstruktion nach Anspruch 6, **dadurch gekennzeichnet, dass** die Traganordnung (10, 17) für die Signalkonditionierungseinheiten (6) zumindest zum Teil doppelwandig ausgeführt ist, wobei ein damit gebildeter, zumindest auf einer Seite an die Signalkonditionierungseinheiten (6) angrenzender Hohlraum mit einer Kühlmediumzu- und - ableitung, vorzugsweise für Umgebungsluft, verbunden ist.

8. Palettenkonstruktion nach Anspruch 7, **dadurch gekennzeichnet, dass** der die Signalkonditionierungseinheiten (6) aufnehmende Innenraum (21) der doppelwandigen Traganordnung (10, 17) separat über Zu- und Ableitungen mit gefilterter Kühlluft gekühlt ist.

9. Palettenkonstruktion nach einem oder mehreren der Ansprüche 4 bis 8, **dadurch gekennzeichnet, dass** die Traganordnung (10, 17) für die Signalkonditionierungseinheiten (6) eine EMV-Abschirmung aufweist.

## Claims

1. A method for preparing and carrying out test stand trials on a test component (1), in particular on one or a plurality of interacting element(s) of a vehicle such as, for example, an internal combustion engine or portions of a drive train, therein the test component (1) is mounted on a transportable pallet construction (8) which comprises a preferably independently mobile base part (9) and retaining elements (3) which are arranged thereon and are preferably spatially displaceable, and wherein the assembly takes place away from the test stand in a setup area, **characterized in that** already beforehand or likewise within the setup area, the sensors (4) are attached, and corresponding signal conditioning units (6) are arranged on a support arrangement (10, 17) of the pallet construction (8), which support arrangement has flow channels for a cooling medium, and are connected to the sensors (4), that the pallet construction (8) equipped in such a manner is then transported to the test stand and is installed there by establishing a signal connection (7) between the signal conditioning units (6) on the pallet construction and the evaluation unit of the test stand, and wherein the signal conditioning units (6) are cooled as required by means of the flow channels.

2. The method according to claim 1, **characterized in that** prior to the installation on the test stand, the equipped pallet construction (8) is functionally tested when still being present in the setup area or in a test area located within the transport path upstream of the test stand.

3. The method according to claim 1 or claim 2, **characterized in that** prior to the installation of the equipped pallet construction (8) on the test stand, the test component (1) is pretreated in a conditioning area, for example, is brought to operating temperature.

4. A pallet construction for use in a method according to any one of the claims 1 to 3, comprising a preferably independently mobile base part (9) and retaining elements (3) which are arranged thereon and are preferably spatially displaceable, and a support arrangement (10), **characterized in that** the support arrangement is provided with signal conditioning units (6) and that the signal conditioning units (6) can be cooled by means of flow channels for a cooling medium which are arranged in the support arrangement (10, 17).

5. The pallet construction according to claim 4, **characterized in that** the support arrangement (10) is displaceable relative to the base part (9) and/or is suspended in a Vibration-insulated manner with respect to the latter.

6. The pallet construction according to claim 4 or claim 5, **characterized in that** the signal conditioning units (6) are mounted in a vibration-insulated manner in the support arrangement (10).

7. The pallet construction according to claim 6, **characterized in that** the support arrangement (10, 17) for the signal conditioning units (6) is at least partially of a double-walled design, wherein a hollow space formed therewith and adjacent on at least one side to the signal conditioning units (6) is connected to a cooling medium supply line and discharge line, preferably for ambient air.

8. The pallet construction according to claim 7, **characterized in that** the interior (21) of the double-walled support arrangement (10, 17), which interior receives the signal conditioning units (6), is cooled separately via supply lines and discharge lines with filtered cooling air.

9. The pallet construction according to one or more of the claims 4 to 8, **characterized in that** the support arrangement (10, 17) for the signal conditioning units (6) has an EMC shielding.

## Revendications

1. Procédé de préparation et d'exécution d'essais au banc sur une éprouvette (1), en particulier sur un ou plusieurs éléments qui coopèrent dans un véhicule automobile, par exemple dans une machine à combustion interne ou dans des parties d'une chaîne cinématique, l'éprouvette (1) étant montée sur une construction transportable en forme de palette (8) qui comprend une partie de base (9) de préférence automobile et des éléments de maintien (3) disposés sur celle-ci, pouvant de préférence être déplacés dans l'espace pour recevoir des éprouvettes (1) différentes, et le montage s'effectuant en dehors du banc d'essai dans une zone d'installation, **caractérisé en ce que** les capteurs (4) sont installés auparavant ou encore également dans la zone d'installation et **en ce que** des unités de conditionnement du signal (6) correspondantes sont disposées sur un agencement porteur (10, 17) de la construction en forme de palette (8) qui possède des canaux de circulation pour un fluide de refroidissement et sont raccordées aux capteurs (4), **en ce que** la construction en forme de palette (8) ainsi équipée est ensuite amenée sur le banc d'essai et installée par l'établissement d'une liaison de signaux (7) entre les unités de conditionnement du signal (6) sur la construction en forme de palette et l'équipement d'analyse du banc d'essai, les unités de conditionnement du signal (6) étant si besoin est refroidies à l'aide des canaux de circulation.

2. Procédé selon la revendication 1, **caractérisé en ce que** la construction en forme de palette (8) équipée, avant son installation sur le banc d'essai, fait encore l'objet d'un essai fonctionnel dans la zone d'installation ou dans une zone d'essai située sur le trajet de transport avant le banc d'essai.

3. Procédé selon l'une des revendications 1 ou 2, **caractérisé en ce que** l'éprouvette (1), avant l'installation de la construction en forme de palette (8) équipée sur le banc d'essai, fait l'objet d'un prétraitement dans une zone de conditionnement, par exemple est amenée à la température de fonctionnement.

4. Construction en forme de palette destinée à être utilisée dans un procédé selon l'une des revendications 1 à 3, qui comprend une partie de base (9) de préférence automobile et des éléments de maintien (3) disposés sur celle-ci, pouvant de préférence être déplacés dans l'espace pour recevoir des éprouvettes (1) différentes, ainsi qu'un agencement porteur (10), **caractérisé en ce que** l'agencement porteur comprend des unités de conditionnement du signal (6) et **en ce que** les unités de conditionnement du signal (6) sont aptes à être refroidies à l'aide de canaux de circulation d'un fluide de refroidissement disposés dans l'agencement porteur (10, 17).

5. Construction en forme de palette selon la revendication 4, **caractérisée en ce que** l'agencement porteur (10) est apte à être déplacé par rapport à la partie de base (9) et/ou est suspendu de manière à réaliser une isolation des vibrations par rapport à ce dernier.

6. Construction en forme de palette selon l'une des revendications 4 ou 5, **caractérisée en ce que** les unités de conditionnement du signal (6) sont montées avec isolation des vibrations dans l'agencement porteur (10).

7. Construction en forme de palette selon la revendication 6, **caractérisée en ce que** l'agencement porteur (10, 17) pour les unités de conditionnement du signal (6) est réalisé au moins partiellement à double paroi, un espace vide ainsi formé, adjacent aux unités de conditionnement du signal (6) sur au moins un côté, étant relié à une conduite d'amenée et d'évacuation de fluide de refroidissement, de préférence pour l'air ambiant.

8. Construction en forme de palette selon la revendication 7, **caractérisée en ce que** l'espace intérieur (21) de l'agencement porteur (10, 17) à double paroi qui reçoit les unités de conditionnement du signal (6) est refroidi séparément à l'aide d'air de refroidissement filtré passant par des conduites d'amenée et d'évacuation.

9. Construction en forme de palette selon l'une ou plusieurs des revendications 4 à 8, **caractérisée en ce que** l'agencement porteur (10, 17) possède un blindage CEM pour les unités de conditionnement du signal (6).
